Europäisches Patentamt
European Patent Office
Office européen des brevets

(11) Veröffentlichungsnummer: **0 000 193 A1**

# (12) EUROPÄISCHE PATENTANMELDUNG

(21) Anmeldenummer: **78100238.1**

(22) Anmeldetag: **26.06.78**

(51) Int. Cl.$^2$: **C 09 D 3/00**

(30) Priorität: **02.07.77 DE 2730098**

(43) Veröffentlichungstag der Anmeldung: **10.01.79 Patentblatt 79/01**

(84) Benannte Vertragsstaaten: **DE FR GB**

(71) Anmelder: **Bayer Aktiengesellschaft, Zentralbereich Patente,Marken und Lizenzen Bayerwerk, D-5090 Leverkusen 1 (DE)**

(72) Erfinder: **Rudolph, Hans, Dr., Haydnstrasse 9, D-4150 Krefeld 1 (DE)**

(72) Erfinder: **Dhein, Rolf, Dr., Deswatinesstrasse 30, D-4150 Krefeld 1 (DE)**

(72) Erfinder: **de Cleur, Eckhard, Dr., Aubruchsgraben 14, D-4100 Duisburg 46 (DE)**

(72) Erfinder: **Haus, Artur, Dr., Zum Eschental 8, D-5063 Overath (DE)**

## (54) Überzugsmittel.

(57) Die Erfindung betrifft in der Wärme polymerisierbare Überzugsmittel, die gegebenenfalls Lösungsmittel, Farbstoffe, Pigmente und andere übliche Lackhilfsmittel enthalten, aus Mischungen von

(A) 70 – 99 Gew.-% mindestens einer polymerisierbaren Verbindung mit mindestens einer polymerisierbaren, äthylenisch ungesättigten C-C/Doppelbindung,

(B) 1 – 30 Gew.-% mindestens eines Aminoplastharzes, und

(C) 0,1 – 20 Gew.-% bezogen auf Summe aus (A) + (B) eines Katalysators der allgemeinen Formel

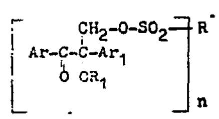

worin

R = niedere Alkyl- oder Aryl- oder Alkylen- oder zweiwertige aromatische Reste,

$R_1$ = H oder niedere Alkylreste,

Ar und $Ar_1$ = gleiche oder verschiedene, gegebenenfalls Alkyl-, Alkoxy- oder Halogen-substituierte aromatische Reste, und

n = 1 oder 2 bedeuten.

Die Überzugsmittel besitzen eine gute Lagerstabilität und ergeben nach der Härtung, insbesondere auf Metallen, haftfeste Überzüge.

EP 0 000 193 A1

Croydon Printing Company Ltd.

BAYER AKTIENGESELLSCHAFT
Zentralbereich
Patente, Marken und Lizenzen

5090 Leverkusen, Bayerwerk
Fr-kl

## Überzugsmittel

Die Erfindung betrifft Überzugsmittel aus Mischungen von polymerisierbaren Verbindungen, Aminoplastharzen und Katalysatoren, die bei Temperaturen oberhalb von ca. 60°C eine radikalisch initiierte Polymerisation auslösen und in Säuren übergehen.

Photoinitiatoren, die eine oder mehrere saure Gruppen enthalten, die unter Einwirkung von UV-Licht unter Freisetzung einer Säure zerfallen, sind aus der DE-OS 1 919 678 bekannt. Die dort beschriebenen α-Methylolbenzoin(äther)-sulfonsäureester werden Aminoplastharzen, Phenolformaldehydharzen oder anderen säurehärtbaren Harzen zugesetzt und die Mischung durch UV-Licht gehärtet. Ein Hinweis auf eine mittels dieser Katalysatoren thermisch initiierte Polymerisation wird in der zitierten Literatur nicht angegeben.

Aus der DE-OS 2 610 437 sind photopolymerisierbare Überzugsmischungen bekannt, die photopolymerisierbare Monomere mit Estergruppen, ein Carboxylgruppen enthaltendes Polymeres, ein Aminoplastharz und Mischungen von Photo-

initiatoren enthalten können. Auch hier wird ausschließlich auf ein Photopolymerisationsverfahren zur Härtung von Überzügen Bezug genommen.

Ferner sind aus der DE-OS 2 613 098 photopolymerisierbare Mischungen zum Herstellen von Formmassen bekannt, die aus Mischungen von einem ungesättigten Polyester, mindestens einem Hydroxylgruppen, olefinsich ungesättigten, photopolymerisierbaren Monomeren, einer Methylolgruppen enthaltenden Melaminverbindung, einem Inhibitor und einem Photoinitiator bestehen. Die Aushärtung der Mischung erfolgt durch Photopolymerisation und gleichzeitiger oder anschließender Zufuhr von Wärme. Die Aushärtung in der Wärme wird durch einen Zusatz von p-Toluolsulfonsäure beschleunigt. Ein Nachteil solcher Mischungen liegt in der ungenügenden Lagerstabilität, der sich besonders dann auswirkt, wenn die beschriebenen Mischungen als Überzugsmittel eingesetzt werden. Weiterhin ist ein gravierender Nachteil der mittels Photopolymerisation härtbaren Überzugsmittel darin zu sehen, daß sie nur in beschränktem Maße pigmentiert werden können.

Aufgabe der vorliegenden Erfindung war es nun, polymerisierbare Überzugsmittel bereitzustellen, die mindestens ein polymerisierbares Monomer mit mindestens einer polymerisierbaren C-C/Doppelbindung und mindestens ein Aminoplastharz enthalten, eine gute Lagerstabilität besitzen und nach Zufuhr von Wärme haftfeste Überzüge, insbesondere auf Metallen, ergeben.

Die Aufgabe wurde dadurch gelöst, daß polymerisierbare Mischungen aus mindestens einem polymerisierbaren Monomeren und mindestens einem Aminoplasten in Gegenwart von speziellen Katalysatoren gehärtet werden, wobei der Katalysator bei Temperaturen oberhalb von 60°C eine radikalisch initiierte Polymerisation auslöst und in Säuren übergeht, die ihrerseits die Polykondensationsreaktionen von Aminoplastharzen mit reaktiven Gruppen (OH, NH) katalysieren.

Gegenstand der Erfindung sind somit in der Wärme polymerisierbare Überzugsmittel, die gegebenenfalls Lösungsmittel, Farbstoffe, Pigmente und andere übliche Lackhilfsmittel enthalten, aus Mischungen von

A) 70 - 99 Gew.-% mindestens einer polymerisierbaren Verbindung mit mindestens einer polymerisierbaren, äthylenisch ungesättigten C-C/Doppelbindung,

B) 1 - 30 Gew.-% mindestens eines Aminoplastharzes und

C) 0,1 - 20 Gew.-%, bezogen auf Summe aus A) + B), eines Katalysators,

dadurch gekennzeichnet, daß der Katalysator, der eine oder mehrere Sulfonsäureestergruppen eingebaut enthält, bei Temperaturen oberhalb von 60°C eine radikalisch initiierte Polymerisation auslöst und beim Zerfall Säuren bildet, die

ihrerseits Polykondensationen von Aminoplastharzen mit reaktiven Gruppen katalysieren.

Vorzugsweise bestehen die Mischungen aus 80 - 97 Gew.-% der Komponente A) und 3 - 20 Gew.-% der Komponente B, wobei die Summe der Gewichtsprozente aus A) und B) 100 ist und der Katalysator in einer Menge von 0,1 - 10 Gew.-%, bezogen auf Summe aus A) und B), in der Mischung enthalten ist.

Als polymerisierbare Verbindungen mit mindestens einer polymerisierbaren äthylenisch ungesättigten C-C/Doppelbindung seien beispielhaft genannt:

I) Ester der Acryl- oder Methacrylsäure mit aliphatischen $C_1$-$C_8$, cycloaliphatischen $C_5$-$C_6$, araliphatischen $C_7$-$C_8$ Monoalkoholen, beispielsweise Methylacrylat, Äthylacrylat, n-Propylacrylat, Isopropylacrylat, n-Butylacrylat, tert.-Butylacrylat, Methylhexylacrylat, 2-Äthylhexylacrylat und die entsprechenden Methacrylsäureester; Cyclopentylacrylat, Cyclohexylacrylat oder die entsprechenden Methacrylsäureester; Benzylacrylat, ß-Phenyläthylacrylat und entsprechende Methacrylsäureester;

II) Hydroxyalkylester der Acryl- oder Methacrylsäure mit 2 - 4 C-Atomen in der Alkoholkomponente, wie 2-Hydroxyäthylacrylat, 2-Hydroxypropylacrylat, 3-Hydroxypropylacrylat, 2-Hydroxybutylacrylat, 4-Hydroxybutylacrylat oder entsprechende Methacrylsäureester;

III) Di- und Polyacrylate sowie Di- und Polymethacrylate von Glykolen mit 2 bis 6 C-Atomen und Polyolen mit 3 - 4 Hydroxylgruppen und 3 bis 6 C-Atomen, wie Äthylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)-acrylate von Polyätherglykolen des Glykols, Propandiol-1,3, Butandiol-1,4;

IV) Aromatische Vinyl- und Divinylverbindungen, wie Styrol, Methylstyrol, Divinylbenzol;

V) N-Methylolacrylamid oder N-Methylolmethacrylamid sowie entsprechende N-Methylolalkyläther mit 1 - 4 C-Atomen in der Alkyläthergruppe bzw. entsprechende N-Methylolallyläther, insbesondere N-Methoxymethyl(meth)acrylamid, N-Butoxy-methyl(meth)acrylamid und N-Allyloxymethyl(meth)acrylamid;

VI) Vinylalkyläther mit 1 - 4 C-Atomen in der Alkylgruppe, wie Vinylmethyläther, Vinyläthyläther, Vinylpropyläther, Vinylbutyläther;

VII) Trimethylolpropandiallyläthermono(meth)acrylat, Vinylpyridin, N-Vinylcarbazol, Triallylphosphat, Triallylisocyanurat;

VIII) Umsetzungsprodukte von Glycidyl(meth)acrylat mit gesättigten, aliphatischen Mono- oder Dicarbonsäuren mit 2 bis 18 C-Atomen oder mit äthylenisch ungesättigten Mono- oder Dicarbonsäuren mit 3 - 10 C-Atomen oder Umsetzungsprodukten von Glycidylestern verzweigtkettiger, aliphatischer Monocarbonsäuren, insbesondere Glycidylester von verzweigten aliphatischen Monocarbonsäuren mit 9 - 11 C-Atomen mit äthylenisch ungesättigten Mono- oder Dicarbonsäuren mit 3 - 10 C-Atomen.

IX) Ungesättigte Polyesterharze aus α.ß-ungesättigten Dicarbonsäuren wie Maleinsäure, Fumarsäure, Itaconsäure, Glutaconsäure, Tetrahydrophthalsäure oder deren Anhydriden und Diolen, wie Äthylenglykol, 1.2-Propandiol, 1.3-Propandiol, 1.2-Butandiol, 1.4-Butandiol 2.2-Dimethylpropandiol, Hexandiol-2,5, Hexandiol-1,6, 4,4'-Dihydroxydicyclohexyl-propan-2,2, Cyclohexandiol, Dimethylolcyclohexan, Diäthylenglykol und 2,2-Bis-[4-(ß-hydroxyäthoxy)-phenyl]-propan und Polyolen, wie Glycerin, Hexantriol, Pentaerythrit, Sorbit, Trimethyloläthan, Trimethylolpropan und Tris-(ß-hydroxyäthyl)-isocyanurat.

In den ungesättigten Polyesterharzen können bis zu 50 Mol-% der ungesättigten einkondensierten Dicarbonsäuren durch andere Dicarbonsäureeinheiten wie der Phthalsäure, Isophthalsäure, 3.6-Dichlorphthalsäure, Tetrachlorphthalsäure, Hexahydrophthalsäure, Bernsteinsäure, Adipinsäure ersetzt sein.

X) Urethanacrylate erhalten aus:

a) Diisocyanaten (1 Mol) und 2 Mol Hydroxyalkyl(meth)acrylaten mit 2 - 4 C-Atomen in der Alkylgruppe;

b) Glykolen oder Polyätherglykolen (1 Mol) und 2 Mol eines Diisocyanats, anschließend umgesetzt mit 2 Molen eines Hydroxyalkyl(meth)acrylats mit 2 - 4 C-Atomen in der Alkylgruppe;

c) Polyolen oder Polyätherpolyolen (n Hydroxylgruppen) und n Mol eines Diisocyanats, anschließend umgesetzt mit n Molen eines Hydroxyalkyl(meth)acrylats mit 2 - 4 C-Atomen in der Alkylgruppe (n = 3 - 6);

d) gesättigten oder ungesättigten Polyestern mit n freien Hydroxylgruppen und n Mol eines Diisocyanats, anschließend umgesetzt mit n Molen eines Hydroxyalkyl(meth)acrylats mit 2 - 4 C-Atomen in der Alkylgruppe; (n = 2 - 6).

Die Kohlenstoffketten der Glykole, Polyätherglykole, Polyole oder Polyätherpolyole können durch 1 oder mehrere Stickstoffatome unterbrochen sein.

XI) Polyepoxypolyacrylate, d. h. Umsetzungsprodukte von Polyepoxiden und einer äthylenisch ungesättigten Monocarbonsäure wie (Meth)Acrylsäure, wobei 60 bis 100 %, vorzugsweise 100 %, der Epoxidgruppen umgesetzt worden sind.

Unter Polyepoxiden werden in der vorliegenden Anmeldung Verbindungen verstanden, die mehr als eine 1,2-Epoxidgruppe pro Molekül, vorzugsweise 2 bis 6, insbesondere 2 Epoxidgruppen enthalten.

Die zu verwendenden Polyepoxidverbindungen können Polyglycidyläther mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken, (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkyläthers erhalten wurden (vergl. britische Patentschrift 1 017 612), aus Polyphenolen, die durch Kondensation von Phenolen und langkettigen, mindestens 2 Halogenatome enthaltenden Halogenparaffinen erhalten wurden (vergl. britische Patentschrift 1 024 288).

Weiter seien genannt Glycidyläther mehrwertiger Alkohole, beispielsweise aus 1,4-Butandiol, 1,4-Butendiol, Glycerin, Trimethylolpropan, Pentaerythrit und Polyäthylenglykolen.

Von weiterem Interesse sind Triglycidylisocyanurat, N,N'-Diepoxypropyloxyamid, Polyglycidylthioäther aus mehrwertigen Thiolen, wie beispielsweise aus Bismercaptomethylbenzol, Diglycidyl-trimethylentrisulfon, epoxidiertes Polybutadien, epoxidiertes Leinöl, Vinylcyclohexendiepoxid.

Außerdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die ggf. durch Methylgruppen substituiert sein können und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

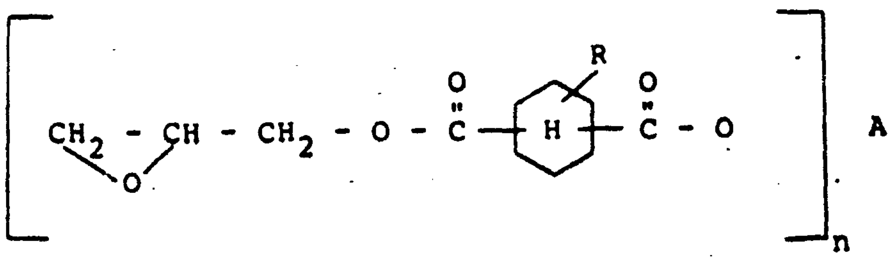

worin A einen mindestens 2-wertigen Rest eines ggf. durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1-3 C-Atomen und n eine Zahl zwischen 2 bis 6 bedeuten, oder Mischungen von Glycidylcarbonsäureestern der angegebenen allgemeinen Formel (vergl. britische Patentschrift 1 220 702).

Bevorzugt sind als Polyepoxidverbindungen Polyglycidyläther des Bisphenols A und Polyglycidylester der Hexahydrophthalsäure, die gegebenenfalls mit einer Dicarbonsäure, beispielsweise Adipinsäure, Bernsteinsäure, Isophthalsäure oder Maleinsäure oder aber mit Ammoniak, Aminen oder $H_2S$, Dithiolen oder Polythiolen vorverlängert worden sind.

Beispielsweise kann die Vorverlängerung mit 0,01 bis 0,5 NH-Äquivalenten, bezogen auf Epoxidäquivalent, an Ammoniak oder eines aliphatischen oder cycloaliphatischen primären oder sekundären Amins oder eines Gemisches der vorgenannten Stickstoffverbindungen erfolgen.

Wird die Vorverlängerung mit Hilfe von Schwefelverbindungen vorgenommen, so können 0,01 bis 0,6 SH-Äquivalente, bezogen auf 1 Epoxidäquivalent, Schwefelwasserstoff, aliphatischen oder cycloaliphatischen, aromatischen oder araliphatischen Dithiolen oder Polythiolen oder von einem Gemisch der vorgenannten Schwefelverbindungen zum Einsatz kommen.

Wird schließlich eine Vorverlängerung mit Dicarbonsäuren vorgenommen, auch tri- und mehrfunktionelle Polycarbonsäuren können u.U. eingesetzt werden, so bewegt sich die Menge ebenfalls zwischen 0,01 und 0,6 Carboxyläquivalenten auf 1 Epoxidäquivalent.

Diese Vorverlängerung kann durch einfaches Umsetzen bei Raumtemperatur oder erhöhter Temperatur im Falle des Ammoniaks, der Amine und SH-Verbindungen bzw. bei erhöhter Temperatur im Falle der Carbonsäure erfolgen. Die vorverlängerten Epoxidverbindungen stellen stets Polyepoxide mit mehr als einer 1,2-Epoxidgruppe dar und sind aus der Literatur bekannt.

Geeignete polymerisierbare Polyepoxypolyacrylate sind beispielsweise Umsetzungprodukte eines Polyepoxids mit mehr als einer 1,2-Epoxidgruppe pro Molekül, dessen Epoxidgruppen

a) mit 0,01 - 0,5 NH-Äquivalenten, bezogen auf 1 Epoxidäquivalent, Ammoniak oder eines aliphatischen oder cycloaliphatischen primären oder sekundären Amins oder eine Aminocarbonsäure oder eines Gemisches der vorgenannten Stickstoffverbindungen, vorzugsweise Ammoniak, und anschließend

b) mit 0,40 - 0,90 Carboxyläquivalenten, bezogen auf 1 Epoxidäquivalent der Acryl- oder Methacrylsäure oder eines Gemisches aus Acryl- und Methacrylsäure sowie daran anschließend

c) mit 0,09 - 0,50 Carboxyläquivalenten, bezogen auf 1 Epoxidgruppe einer gesättigten aliphatischen $C_1$-$C_{12}$-, einer cycloaliphatischen oder einer aromatischen $C_6$-$C_{20}$-Carbonsäure umgesetzt wurden,

so daß mindestens 80 % der ursprünglich vorhandenen Epoxidgruppen durch diese 3 Teilschritte umgesetzt worden sind.

Die Umsetzung mit der Stickstoffkomponente erfolgt bei 20 - 90°C und mit der (Meth)Acrylsäure bzw. den Carbonsäuren c) bei 40 - 90°C, jeweils in Substanz oder inerten organischen Lösungsmitteln, wobei im Falle der Komponenten b) und c) auch 0,01 - 3 Gew.-%, bezogen auf Ausgangsepoxid, an Katalysatoren wie tert.-Amine, Alkalisalze organischer Carbonsäuren, Alkalihydroxide, Phosphine, Arsine oder Stibine zugesetzt werden können.

Die aufgezählten polymerisierbaren Monomeren A) der Gruppen I bis XI können untereinander beliebig in jedem gewünschten Mengenverhältnis abgemischt werden, beispielsweise Monomere der Gruppe IX mit Monomeren der Gruppen I bis IV oder Monomere der III mit denen der Gruppen I, II und IV. Bevorzugt sind jedoch die Polyepoxypolyacrylate der Gruppe XI allein oder in Kombination mit Monomeren mindestens einer der Gruppen I bis IV und VIII.

Durch die Vielzahl der Mischungsmöglichkeiten lassen sich je nach Zweck der Beschichtung die unterschiedlichsten physikalischen Eigenschaften einstellen.

Als Aminoplastharze B) werden beispielsweise eingesetzt: Harnstoffaldehydharze, wie sie in bekannter Weise durch Kondensation von Harnstoff oder Harnstoffderivaten und Aldehyden wie Formaldehyd, Acetaldehyd usw. vorzugsweise in Gegenwart von $C_1$-$C_6$-Monoalkoholen erhalten werden.

Aminotriazinaldehydharze, die in bekannter Weise durch Kondensation von Aminotriazinen, insbesondere Melamin, mit einem Aldehyd wie Formaldehyd, Acetaldehyd, Benzaldehyd und dergleichen, insbesondere Formaldehyd, vorzugsweise in Gegenwart eines niederen Alkohols wie Methanol, Äthanol, Propanol oder Butanol hergestellt werden. Derartige Produkte sind auch im Handel erhältlich, beispielsweise Hexamethoxymethylmelamin.

Als Katalysatoren, die unter der Einwirkung von Wärme eine radikalisch initiierte Polymerisation auslösen und bei ihrem Zerfall Säuren in Freiheit setzen, seien beispielhaft genannt:

α-Methylol-benzoin-sulfonsäureester der allgemeinen Formel

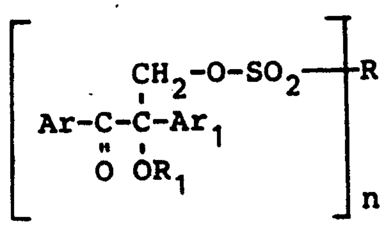

worin

R = niederer Alkyl- oder Aryl- oder Alkylen- oder zweiwertiger aromatischer Rest,

$R_1$ = H oder niederer Alkylrest,

Ar u. $Ar_1$ = gleiche oder verschiedene, gegebenenfalls Alkyl-, Alkoxy- oder Halogen-substituierte aromatische Reste und

n = 1 oder 2

bedeuten. Derartige Katalysatoren sind als Photoinitiatoren aus der DE-OS 1 919 678 bekannt.

Vorzugsweise bedeuten in der vorstehenden Formel R Alkyl mit 1 bis 6 C-Atomen, Phenyl, Phenyl substituiert durch $C_1$-$C_4$ Alkyl, Naphthyl, Alkylen mit 2 bis 6 C-Atomen; den Rest 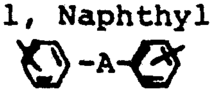 , worin A für

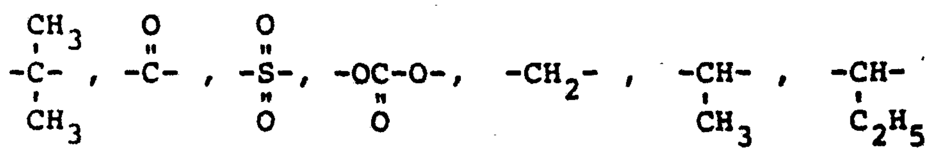 steht;

$R_1$=H oder Alkyl mit 1 - 4 C-Atomen; Ar und/oder $Ar_1$ Phenyl, Phenyl substituiert durch Alkyl mit 1 bis 4 C-Atomen, durch Alkoxy mit 1 bis 4 C-Atomen, durch Chlor und/oder Brom.

Namentlich seien beispielhaft genannt: α-Hydroxymethyl-benzoin-methansulfonsäureester, -benzolsulfonsäureester, -p-toluolsulfonsäureester und -ß-naphthalinsulfonsäure-ester, der α-Hydroxymethyl-4,4'-dimethylbenzoin-benzolsulfonsäureester, der α-Hydroxymethyl-4,4'-dichlorbenzoin-benzolsulfonsäureester, der α-Hydroxymethylbenzoin-isopropyläther-benzolsulfonsäureester und das Bis-(α-hydroxy-methylbenzoin)-diphenylmethan-4,4'-disulfonat.

Für das erfindungsgemäße Verfahren können auch Mischungen der formelmäßig angegebenen bzw. namentlich genannten Katalysatoren eingesetzt werden. -

Wenn es auch möglich ist, die erfindungsgemäßen Beschichtungsmittel ohne zusätzliche Verdünnung mit Lösungsmitteln zu applizieren, so ist natürlich zum Einstellen einer gewünschten Viskosität die Abmischung mit inerten Lösungsmitteln wie Butylacetat, Äthylacetat, Äthanol, Isopropanol, Butanol, Aceton, Äthylmethylketon, Diäthylketon, Cyclohexan, Cyclohexanon, Cyclopentan, Cyclopentanon, n-Heptan, n-Hexan, n-Octan, Isooctan, Toluol, Xylol, Methylenchlorid, Chloroform, 1,1-Dichloräthan, 1,2-Dichloräthan, 1,1,2-Trichloräthan, Tetrachlorkohlenstoff möglich. Um eine verarbeitungsgerechte Viskosität zu erhalten, können 0 bis 50 Gew.-%, vorzugsweise 2 bis 40 Gew.-% an Lösungsmitteln, bezogen auf Mischung aus (A) + (B) + (C) und Lösungsmittel, zugesetzt werden.

Bei Einsatz der erfindungsgemäßen Beschichtungsmittel können die üblichen Füllstoffe und Pigmente mitverwendet werden, wie Talkum, Schwerspat, Kreide, Gips, Kieselsäuren, Asbestmehle, Leichtspat, $TiO_2$ und Buntpigmente.

Das Auftragen der Überzugsmittel auf geeignete Substrate kann mittels in der Lackindustrie üblichen Methoden, wie Sprühen, Walzen, Rakeln, Drucken, Tauchen, Fluten, Streichen, Pinseln, erfolgen.

Geeignete Substrate sind Papier, Karton, Leder, Holz, Kunststoffe, Textilien, keramische Materialien, Metalle, vorzugsweise Papier und Karton sowie Holz und Metall.

Die in den Beispielen angegebenen Prozentangaben und Teile beziehen sich auf das Gewicht, sofern nicht anders vermerkt.

Ausgangsmaterial 1

6800 g Bisphenol A-bisglycidäther (Epoxidäquivalent 190) wurden in einem 10 1-Dreihalskolben mit Rührer, Tropftrichter und Rückflußkühler auf 60°C erhitzt. Bei dieser Temperatur wurden 42,5 g (2,5 Mol) gasförmiges Ammoniak innerhalb von 20 Stunden in die Reaktionslösung eingeleitet. Anschließend wurden 68,4 g Thiodiglykol (Katalysator) zugesetzt und 1386 g (19,25 Mol) Acrylsäure bei 60°C innerhalb von 2 Stunden und im Anschluß daran 340 g (5,66 Mol) Essigsäure in 30 Minuten zugetropft. Es wurde bei 60°C nachgerührt bis eine Säurezahl von 0 (Titration mit n/10 NaOH/Bromthymolblau) erreicht worden war, mit 0,05 Gew.-% p-Methoxyphenol, bezogen auf erhaltenes Harz, stabilisiert und dann auf Zimmertemperatur abgekühlt.

Ausgangsmaterial 2

122,5 g Glyzidylester von verzweigtkettigen Monocarbonsäuren mit 9 - 11 C-Atomen (Epoxidäquivalent 245), 36 g (0,5 Mol) Acrylsäure, 1,6 g Triäthylbenzylammoniumchlorid und 0,016 g Toluhydrochinon werden unter Überleiten von Stickstoff 10 h bei 90°C gerührt. Nach dieser Zeit liegt die Säurezahl unter 1.

Beispiel 1

| | | |
|---|---|---|
| 139,01 | Tle | Ausgangsmaterial 1 |
| 24,53 | " | Hexandiolbisacrylat, |
| 10,06 | " | Hydroxypropylacrylat |
| 8,68 | " | α-Hydroxymethylbenzoin-methansulfonsäureester |
| 17,72 | " | Hexamethoxymethylmelamin |

werden homogen vermischt.

50 Tle dieser Mischung werden mit 5,6 Tln Hexandiolbisacrylat verdünnt und mittels eines Filmziehers in einer Naßfilmstärke von 150 $\mu$ auf entfettete Bleche aufgezogen. Nach einer Einbrennzeit von 10 Min. bei 160°C werden sehr harte, elastische und haftfeste Überzüge mit klebfreier Oberfläche erhalten.

Beispiel 2

Es wird aus folgenden Bestandteilen eine Mischung hergestellt:

| | | |
|---|---|---|
| 139,01 | Tle | Ausgangsmaterial 1 |
| 10,06 | " | " 2 |
| 8,68 | " | $\alpha$-Hydroxymethylbenzoin-methansulfonsäureester |
| 17,72 | " | Hexamethoxymethylmelamin |
| 24,53 | " | Äthanol. |

50 Tle dieser Mischung werden mit 5,6 Tln Ausgangsmaterial 2 gemischt und dann in einer Naßfilmstärke von 150 $\mu$ auf entfettete Bleche aufgetragen. 10 Min. bei 160°C eingebrannt, werden elastische Überzüge mit klebfreier Oberfläche erhalten.

Vergleichsversuch

50 Tle einer Mischung aus

| | | |
|---|---|---|
| 39,01 | Tln | Ausgangsmaterial 1 |
| 10,06 | " | Ausgangsmaterial 2 |
| 8,68 | " | Benzoylperoxid |
| 17,72 | " | Hexamethoxymethylmelamin |
| 24,53 | " | Äthanol |

werden mit 5,6 Tln Ausgangsmaterial 2 abgemischt und wie in Beispiel 2 zu Überzügen verarbeitet. Nach einer Einbrennzeit von 10 Min. bei 160°C werden Überzüge erhalten, die an der Oberfläche klebrig sind.

Aus dem Vergleichsversuch ist ersichtlich, daß nur die erfindungsgemäße Kombination zu guten Überzügen führt.

## Patentanspruch

In der Wärme polymerisierbare Überzugsmittel, die gegebenenfalls Lösungsmittel, Farbstoffe, Pigmente und andere übliche Lackhilfsmittel enthalten, aus Mischungen von

A) 70 - 99 Gew.-% mindestens einer polymerisierbaren Verbindung mit mindestens einer polymerisierbaren, äthylenisch ungesättigten C-C/Doppelbindung,

B) 1 - 30 Gew.-% mindestens eines Aminoplastharzes und

C) 0,1 - 20 Gew.-%, bezogen auf Summe aus A) + B) eines Katalysators,

dadurch gekennzeichnet, daß der Katalysator mindestens ein α-Methylol-benzoin-sulfonsäureester der allgemeinen Formel

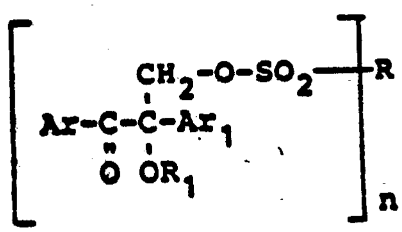

ist, worin

R = niederer Alkyl- oder Aryl- oder Alkylen- oder zweiwertiger aromatischer Rest,

$R_1$= H oder niederer Alkylrest,

Ar u. $Ar_1$ = gleiche oder verschiedene, gegebenenfalls Alkyl-, Alkoxy- oder Halogen-substituierte aromatische Reste und

n = 1 oder 2

bedeuten.

Europäisches Patentamt

# EUROPÄISCHER RECHERCHENBERICHT

0000193

Nummer der Anmeldung
EP 78 10 0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 1 919 678 (BAYER)<br>* Patentansprüche 1,2; Seite 2, Zeilen 15,18 *<br>—— | 1 |

X Der vorliegende Recherchenbericht wurde für alle Patentansprüche erstellt.

| Recherchenort | Abschlußdatum der Recherche | Prüfer |
|---|---|---|
| Den Haag | 03-10-1978 | MEULEMANS |

KLASSIFIKATION DER ANMELDUNG (Int.Cl.²)

C 09 D 3/00

RECHERCHIERTE SACHGEBIETE (Int. Cl.²)

C 09 D 3/00
C 08 F 283/00

KATEGORIE DER GENANNTEN DOKUMENTE

X: von besonderer Bedeutu
A: technologischer Hintergr
O: nichtschriftliche Offenba
P: Zwischenliteratur
T: der Erfindung zugrunde liegende Theorien oder Grundsätze
E: kollidierende Anmeldun
D: in der Anmeldung angef Dokument
L: aus andern Gründen angeführtes Dokument
&: Mitglied der gleichen Pa familie, übereinstimm Dokument